# FASCICULE DE BREVET EUROPEEN

(11) **EP 2 563 609 B1**
(45) Date de publication et mention de la délivrance du brevet: **15.06.2016**
(21) Numéro de dépôt: 11719301.1
(22) Date de dépôt: 25.03.2011
(51) Int. Cl.: B60J 10/00

(54) **ENSEMBLE COMPRENANT UN LECHEUR EXTERIEUR DE VITRE ET UN ENJOLIVEUR POURVUS DE MOYENS D'INDEXATION ET VEHICULE AUTOMOBILE EQUIPE DE TELS ENSEMBLES**
BEFESTIGUNGSANORDNUNG ZWISCHEN EINER DICHTUNG UND EINER ZIERLEISTE FÜR EIN KFZ
FIXATION ARRANGEMENT BETWEEN SEALING STRIP AND TRIM MOULDING FOR AN AUTOMOTIVE VEHICLE

(30) Priorité: 27.04.2010 FR 1053226
(43) Date de publication de la demande: 06.03.2013
(73) Titulaire: Peugeot Citroën Automobiles SA, 78140 Vélizy Villacoublay (FR)
(72) Inventeur: GRUNCHEC, Grégory, F-92130 Issy Les Moulineaux (FR); GUILLY, Xavier, F-91940 Les Ulis (FR)
(74) Mandataire: Fernandez, Francis Lionel
(86) Numéro de dépôt international: PCT/FR2011/050653
(87) Numéro de publication internationale: WO 2011/135220

(56) Documents cités:
- EP-A2- 1 652 710
- WO-A1-01/34933
- JP-A- 2005 254 984
- US-A1- 2005 189 782

## Description

La présente invention concerne un ensemble comprenant un lécheur extérieur de vitre pour porte latérale de véhicule automobile et un enjoliveur destiné à être fixé à la carrosserie du véhicule.

Un lécheur extérieur de vitre se présente en général sous la forme d'un profilé en matière élastomère (plastique ou caoutchouc) de section transversale en U qui est fixé par emboîtement sur la feuillure qui est réalisée le long du bord supérieur du panneau extérieur d'une porte latérale.

L'indexation du lécheur extérieur de vitre par rapport à l'axe longitudinal X du véhicule est généralement assurée par un moulage du lécheur et une encoche réalisée dans la feuillure du bord supérieur du panneau de la porte.

Cependant, le moulage du lécheur peut se déformer lors du montage du lécheur, de sorte que la répétabilité de l'indexation suivant l'axe X ne peut être garantie.

Certains véhicules sont équipés d'un enjoliveur fixé sur la carrosserie près du bord latéral arrière de la vitre des portes latérales arrières.

Cet enjoliveur est communément appelé enjoliveur de coulisse.

Après montage du lécheur extérieur, l'extrémité de ce lécheur doit être placée de façon sensiblement jointive par rapport à une partie adjacente de l'enjoliveur.

Il est aussi connu du document US 2005/0189782, qui est considéré comme l'état de la technique le plus proche, d'avoir un véhicule équipé d'un enjoliveur fixé sur la carrosserie, près du bord latéral arrière de la vitre des portes latérales avant, qui collabore avec l'extrémité arrière d'un lécheur de vitre pour assurer l'indexage et la fixation de l'extrémité arrière du lécheur de vitre avant.

L'expérience montre que, du fait des dispersions de fabrication et des défauts de montage, les prescriptions en matière de jeux et d'affleurements, entre l'extrémité du lécheur et l'enjoliveur, ne sont pas satisfaites.

Le but de la présente invention est de remédier à cet inconvénient.

Ce but est atteint avec les caractéristiques de la revendication 1.

Selon l'invention, l'extrémité du lécheur extérieur comprend un évidement allongé suivant la longueur du lécheur qui débouche vers cette extrémité et l'enjoliveur porte dans la zone de fixation de ladite extrémité du lécheur, une patte faisant saillie par rapport à une face extérieure de l'enjoliveur, ledit évidement de l'extrémité du lécheur étant adapté pour pouvoir s'engager sur ladite patte de l'enjoliveur parallèlement audit axe longitudinal.

L'engagement de l'évidement du lécheur sur la patte en saillie de l'enjoliveur permet d'obtenir une indexation suivant l'axe longitudinal X du véhicule.

L'indexation ainsi obtenue entre l'extrémité du lécheur et l'enjoliveur garantit une parfaite répétabilité en ce qui concerne la qualité du montage.

De préférence également, ladite patte comprend une partie qui s'étend parallèlement à ladite face extérieure de l'enjoliveur et présente une épaisseur sensiblement égale à la largeur de l'évidement allongé du lécheur extérieur.

Ainsi après montage, aucun jeu transversal n'existe entre le lécheur et l'enjoliveur, ce qui assure une indexation parfaite suivant l'axe transversal Y.

Dans une version avantageuse de l'invention, ladite partie de la patte est reliée à la face extérieure de l'enjoliveur par une entretoise de façon à définir entre ladite partie de la patte et la face extérieure de l'enjoliveur un logement pouvant recevoir une extrémité d'une paroi intérieure du lécheur extérieur dont l'une des faces est adjacente audit évidement allongé et l'autre face est située dans le prolongement de la face intérieure du lécheur extérieur.

Ainsi, après montage, l'extrémité du lécheur est doublement solidarisée à l'enjoliveur, d'une part par la patte engagée dans l'évidement et la paroi intérieure du lécheur qui est engagée dans le logement compris entre la patte et l'enjoliveur.

Selon une autre particularité avantageuse, la largeur dudit logement est sensiblement égale à l'épaisseur de ladite extrémité de la paroi intérieure du lécheur extérieur.

Cette particularité contribue à l'obtention d'une parfaite indexation suivant Y.

De préférence également, l'extrémité du lécheur extérieur comporte une paroi extérieure qui est séparée de ladite paroi intérieure par ledit évidement, l'extrémité de cette paroi extérieure s'étendant au-delà de l'extrémité de ladite paroi intérieure selon une distance sensiblement égale à la longueur de ladite patte.

Cette particularité permet l'engagement de l'évidement allongé du lécheur sur la patte de l'enjoliveur.

Selon une autre particularité importante, lorsque ladite patte est engagée dans ledit évidement allongé du lécheur extérieur, l'extrémité de ladite paroi intérieure est en contact avec l'entretoise qui relie la patte à la face extérieure de l'enjoliveur et l'extrémité de ladite paroi extérieure est sensiblement jointive avec une surface extérieure de l'enjoliveur s'étendant transversalement par rapport à ladite face extérieure de l'enjoliveur.

Ce contact permet une parfaite indexation suivant l'axe longitudinal X.

Selon une particularité également importante de l'invention, ladite paroi intérieure de l'extrémité du lécheur extérieur présente le long de son bord inférieur un rebord faisant saillie vers ladite paroi extérieure, ce rebord pouvant s'engager sous le bord inférieur de ladite patte pour caler le bord inférieur de la paroi intérieure du lécheur par rapport à ladite patte.

Cette particularité permet une parfaite indexation suivant l'axe vertical Z.

Selon un autre aspect, l'invention concerne également un véhicule automobile équipé d'ensembles comprenant un enjoliveur et un lécheur extérieur de vitre selon l'invention.

D'autres particularités et avantages de l'invention apparaîtront encore tout au long de la description ci-après.

Aux dessins annexés, donnés à titre d'exemples, non limitatifs :
- la figure 1 est une vue latérale partielle d'un véhicule automobile équipé d'un ensemble lécheur extérieur de vitre et enjoliveur selon l'invention,
- la figure 2 est une vue partielle en perspective de l'enjoliveur et de l'extrémité du lécheur extérieur de vitre,
- la figure 3 est une autre vue partielle en perspective à échelle agrandie de l'enjoliveur,
- la figure 4 est une vue en coupe suivant le plan C-C de la figure 3,
- la figure 5 est une vue en coupe suivant le plan B-B de la figure 3.

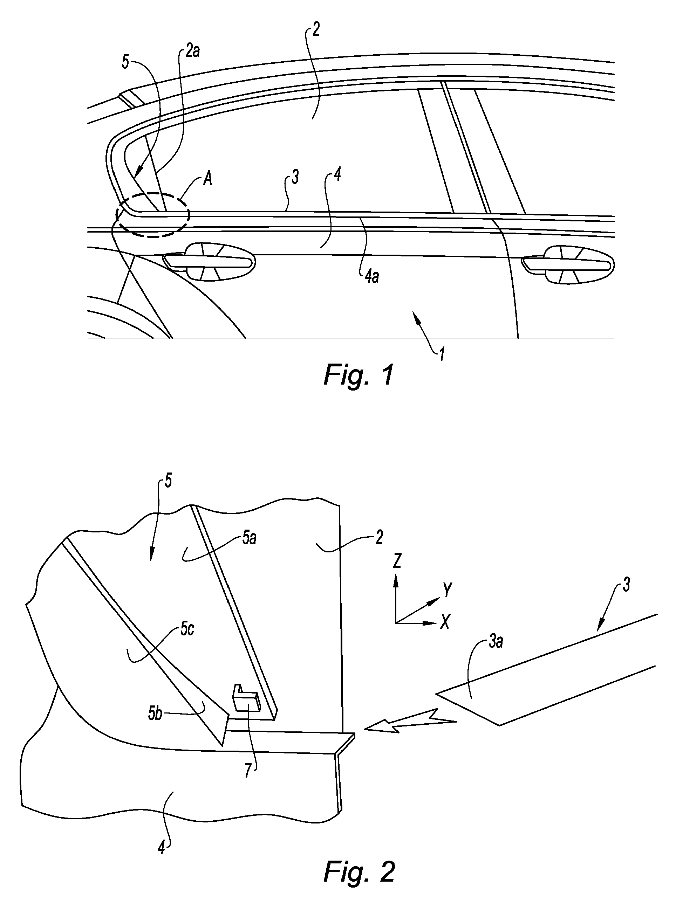

La figure 1 montre un véhicule dont la porte arrière 1 comporte une vitre 2 et un lécheur extérieur de vitre 3 fixé le long du bord supérieur 4a du panneau extérieur 4 de la porte.

Près du bord latéral arrière 2a de la vitre 2 est fixé un enjoliveur de coulisse 5.

Cet enjoliveur 5 est fixé à la carrosserie à l'aide de moyens connus qui ne sont pas représentés.

La zone A représentée en pointillés sur la figure 1 est la zone concernée par la présente invention dans laquelle l'extrémité arrière du lécheur extérieur de vitre 3 est fixée à l'enjoliveur 5.

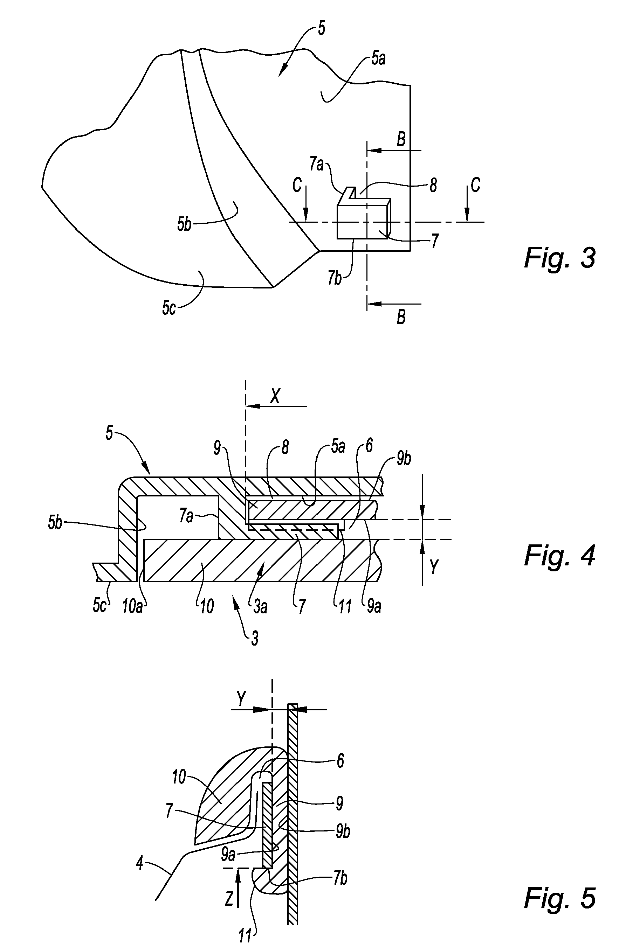

Cette zone de l'enjoliveur A est représentée à échelle agrandie sur les figures 2 et 3, avant fixation du lécheur extérieur de vitre 3.

Conformément à l'invention, l'extrémité arrière 3a du lécheur extérieur de vitre 3 comporte des moyens de fixation destinés à coopérer avec des moyens de fixation complémentaires prévus sur l'enjoliveur 5, de façon à pouvoir indexer l'extrémité arrière 3a du lécheur 3 par rapport à l'enjoliveur 5 suivant l'axe longitudinal X, l'axe transversal Y et l'axe vertical Z du véhicule.

Ces trois axes X, Y, Z sont représentés sur la figure 2.

Les moyens de fixation prévus sur l'enjoliveur 5 sont visibles sur les figures 2 et 3 ainsi que sur les figures 4 et 5 qui montrent comment les moyens de fixation prévus à l'extrémité arrière du lécheur 3 coopèrent avec ceux prévus sur l'enjoliveur 5.

Comme montré sur ces figures 4 et 5, l'extrémité arrière 3a du lécheur extérieur 3 comprend un évidement 6 allongé suivant la longueur du lécheur 3 qui débouche vers cette extrémité 3a et l'enjoliveur 5 porte dans la zone de fixation de cette extrémité 3a du lécheur 3 (voir également les figures 2 et 3), une patte 7 faisant saillie par rapport à une face extérieure 5a de l'enjoliveur 5.

L'évidement allongé 6 de l'extrémité 3a du lécheur 3 est adapté pour s'engager sur la patte 7 de l'enjoliveur parallèlement à l'axe longitudinal X du véhicule, comme montré sur la figure 4.

La patte 7 de l'enjoliveur 5 comprend une partie qui s'étend parallèlement à la face extérieure 5a de l'enjoliveur 5 et présente une épaisseur sensiblement égale à la largeur de l'évidement allongé 6 du lécheur extérieur 3.

Ainsi, il n'existe sensiblement pas de jeu dans la direction Y lorsque le lécheur 3 est monté.

La partie ci-dessus de la patte 7 est reliée à la face extérieure 5a de l'enjoliveur 5 par une entretoise 7a de façon à définir entre la patte 7 et la face extérieure 5a de l'enjoliveur 5 un logement 8 pouvant recevoir, comme montré sur la figure 4, une extrémité d'une paroi intérieure 9 du lécheur extérieur 3.

L'une 9a des faces de cette paroi intérieure 9 est adjacente à l'évidement allongé 6 et l'autre face 9b est située dans le prolongement de la face intérieure du lécheur extérieur 3.

La largeur du logement 8 est sensiblement égale à l'épaisseur de l'extrémité de la paroi intérieure 9 du lécheur extérieur 3.

Les figures 4 et 5 montrent également que l'extrémité 3a du lécheur extérieur 3 comporte une paroi extérieure 10 qui est séparée de la paroi intérieure 9 par l'évidement allongé 6.

L'extrémité 10a de la paroi extérieure 10 s'étend (voir figure 4) au-delà de l'extrémité de la paroi intérieure 9 selon une distance sensiblement égale à la longueur de la patte 7.

Ainsi, lorsque la patte 7 est engagée dans l'évidement allongé 6 du lécheur extérieur 3, l'extrémité de la paroi intérieure 9 est en contact avec l'entretoise 7a qui relie la patte 7 à la face extérieure 5a de l'enjoliveur 5 et l'extrémité 10a de la paroi extérieure 10 est sensiblement jointive avec une surface extérieure 5b de l'enjoliveur 5 s'étendant transversalement par rapport à la face extérieure 5a de l'enjoliveur 5.

Le contact entre l'extrémité de la paroi intérieure 9 avec l'entretoise 7a permet d'indexer la position du lécheur 3 suivant l'axe longitudinal X.

La figure 5 montre par ailleurs que la paroi intérieure 9 de l'extrémité du lécheur extérieur 3 présente le long de son bord inférieur un rebord 11 faisant saillie vers la paroi extérieure 10.

Ce rebord 11 s'engage sous le bord inférieur 7b de ladite patte 7 pour caler le bord inférieur de la paroi intérieure 9 du lécheur 3 par rapport à la patte 7.

Ce rebord 11 permet ainsi d'indexer la position du lécheur 3 dans la direction de l'axe vertical Z du véhicule.

Pour monter le lécheur extérieur 3, on procède comme suit :
- on présente le lécheur 3 près de la zone de fixation sur l'enjoliveur 5, de façon inclinée, comme montré sur la figure 2,
- on place l'extrémité du lécheur 3 dans l'axe de la patte 7 de l'enjoliveur 5,
- on pousse le lécheur 3 vers la surface 5b de l'enjoliveur 5 pour que l'évidement allongé 6 du lécheur 3 s'engage sur la patte 7 comme montré sur la figure 4 et,
- on rabat le lécheur 3 sur le bord supérieur du panneau extérieur de la porte pour l'encliqueter sur la feuillure d'une façon en elle-même connue.

En fin de montage, l'extrémité de la paroi intérieure 9 du lécheur 3 est en contact avec l'entretoise 7a, ce qui permet d'indexer le lécheur 3 suivant l'axe X.

Par ailleurs, l'évidement allongé 6 engagé sur la patte 7 permet d'indexer le lécheur 3 suivant l'axe Y et le rebord 11 de la paroi intérieure 9 du lécheur en appui sous le bord inférieur 7b de la patte 7 permet d'indexer le lécheur 3 suivant l'axe Z.

Dans cette position, la surface extérieure du lécheur 3 affleure la surface extérieure 5c de l'enjoliveur 5, comme montré sur la figure 4.

Bien entendu, l'invention n'est pas limitée à l'exemple de réalisation décrit.

Ainsi, l'extrémité du lécheur 3 pourrait être indexée par rapport à l'enjoliveur 5 grâce à une languette faisant saillie axialement sur l'extrémité du lécheur 3 pouvant s'engager dans un évidement complémentaire réalisé sur la surface transversale 5b de l'enjoliveur 5.

## Revendications

1. Ensemble comprenant d'une part un lécheur extérieur de vitre (3) pour porte latérale (1) de véhicule automobile destiné à être fixé le long du bord supérieur (4a) du panneau extérieur (4) de la porte latérale et d'autre part un enjoliveur (5) destiné à être fixé à la carrosserie du véhicule près du bord latéral arrière de la vitre (2) de ladite porte latérale, une extrémité (3a) du lécheur extérieur de vitre (3) comporte des moyens de fixation coopérant avec des moyens de fixation complémentaires prévus sur l'enjoliveur (5), de façon à indexer ladite extrémité (3a) par rapport à l'enjoliveur (5) suivant l'axe longitudinal (X), l'axe transversal (Y) et l'axe vertical (Z) du véhicule, **caractérisé en ce que** l'extrémité (3a) du lécheur extérieur (3) comprend un évidement (6) allongé suivant la longueur du lécheur (3) qui débouche vers cette extrémité (3a) et l'enjoliveur (5) porte dans la zone de fixation de ladite extrémité du lécheur (3), une patte (7) faisant saillie par rapport à une face extérieure (5a) de l'enjoliveur (5), ledit évidement (6) de l'extrémité du lécheur (3) s'engageant sur ladite patte (7) de l'enjoliveur (5) parallèlement audit axe longitudinal (X).

2. Ensemble selon la revendication 1, **caractérisé en ce que** ladite patte (7) comprend une partie qui s'étend parallèlement à ladite face extérieure (5a) de l'enjoliveur (5) et présente une épaisseur sensiblement égale à la largeur de l'évidement allongé (6) du lécheur extérieur (3).

3. Ensemble selon la revendication 2, **caractérisé en ce que** ladite partie de la patte (7) est reliée à la face extérieure (5a) de l'enjoliveur (5) par une entretoise (7a) de façon à définir entre ladite partie de la patte (7) et la face extérieure (5a) de l'enjoliveur un logement (8) recevant une extrémité d'une paroi intérieure (9) du lécheur extérieur (3) dont l'une des faces est adjacente audit évidement allongé (6) et l'autre face est située dans le prolongement de la face intérieure du lécheur extérieur (3).

4. Ensemble selon la revendication 3, **caractérisé en ce que** la largeur dudit logement (8) est sensiblement égale à l'épaisseur de ladite extrémité de la paroi intérieure (9) du lécheur extérieur (3).

5. Ensemble selon l'une des revendications 3 ou 4, **caractérisé en ce que** l'extrémité du lécheur extérieur (3) comporte une paroi extérieure (10) qui est séparée de ladite paroi intérieure (9) par ledit évidement (6), l'extrémité de cette paroi extérieure (10) s'étendant au-delà de l'extrémité de ladite paroi intérieure (9) selon une distance sensiblement égale à la longueur de ladite patte (7).

6. Ensemble selon la revendication 5, **caractérisé en ce que** lorsque ladite patte (7) est engagée dans ledit évidement allongé (6) du lécheur extérieur (3), l'extrémité de ladite paroi intérieure (9) est en contact avec l'entretoise (7a) qui relie la patte (7) à la face extérieure (5a) de l'enjoliveur (5) et l'extrémité de ladite paroi extérieure (10) est sensiblement jointive avec une surface extérieure (5b) de l'enjoliveur (5) s'étendant transversalement par rapport à ladite face extérieure (5a) de l'enjoliveur (5).

7. Ensemble selon l'une des revendications 3 à 6, **caractérisé en ce que** ladite paroi intérieure (9) de l'extrémité du lécheur extérieur (3) présente le long de son bord inférieur un rebord (11) faisant saillie vers ladite paroi extérieure (10), ce rebord (11) s'engage sous le bord inférieur (7b) de ladite patte (7) pour caler le bord inférieur de la paroi intérieure (9) du lécheur (3) par rapport à ladite patte (7).

8. Véhicule automobile équipé d'ensembles comprenant un enjoliveur (5) et un lécheur extérieur de vitre (3) selon l'une des revendications 1 à 7.

## Patentansprüche

1. Anordnung, die einerseits eine äußere Scheibendichtung (3) für Seitentür (1) eines Kraftfahrzeugs umfasst, die dazu bestimmt ist, entlang des oberen Rands (4a) der Außenplatte (4) der Seitentür befestigt zu werden, und andererseits eine Zierleiste (5), die dazu bestimmt ist, an der Karosserie des Fahrzeugs in der Nähe des hinteren Seitenrands der Scheibe (2) der Seitentür befestigt zu sein, wobei ein Ende (3a) der äußeren Scheibendichtung (3) Mittel zum Befestigen umfasst, die mit komplementären Mitteln zum Befestigen zusammenwirken, die auf der Zierleiste (5) vorgesehen sind, so dass das Ende (3a) in Bezug zu der Zierleiste (5) entlang der Längsachse (X), der Querachse (Y) und der senkrechten Achse (Z) des Fahrzeugs indiziert wird, **dadurch gekennzeichnet, dass** das Ende (3a) der äußeren Dichtung (3) eine Aussparung (6) umfasst, die entlang der Länge der Dichtung (3) gestreckt ist, die zu diesem Ende (3a) mündet, und die Zierleiste (5) in der Befestigungszone des Endes der Dichtung (3) eine Pratze (7) trägt, die in Bezug auf eine Außenseite (5a) der Zierleiste (5) vorsteht, wobei die Aussparung (6) des Endes der Dichtung (3) auf der Pratze (7) der Zierleiste (5) parallel zu der Längsachse (X) eingreift.

2. Anordnung nach Anspruch 1, **dadurch gekennzeichnet, dass** die Pratze (7) einen Teil umfasst, der sich parallel zu der Außenseite (5a) der Zierleiste (5) erstreckt und eine Stärke im Wesentlichen gleich der Breite der gestreckten Aussparung (6) der äußeren Dichtung (3) aufweist.

3. Baugruppe nach Anspruch 2, **dadurch gekennzeichnet, dass** der Teil der Pratze (7) mit der Außenseite (5a) der Zierleiste (5) durch einen Abstandhalter (7a) derart verbunden ist, dass zwischen dem Teil der Pratze (7) und der Außenseite (5a) der Zierleiste eine Aufnahme (8) definiert ist, die ein Ende einer Innenwand (9) der äußeren Dichtung (3) aufnimmt, von der eine der Seiten neben der gestreckten Aussparung (6) und die andere Seite in der Verlängerung der Innenseite der äußeren Dichtung (3) liegt.

4. Anordnung nach Anspruch 3, **dadurch gekennzeichnet, dass** die Breite der Aufnahme (8) im Wesentlichen gleich der Stärke des Endes der Innenwand (9) der äußeren Dichtung (3) ist.

5. Anordnung nach einem der Ansprüche 3 oder 4, **dadurch gekennzeichnet, dass** das Ende der äußeren Dichtung (3) eine Außenwand (10) umfasst, die von der Innenwand (9) durch die Aussparung (6) getrennt ist, wobei sich das Ende dieser Außenwand (10) über das Ende der Innenwand (9) entlang einer Distanz, die im Wesentlichen gleich der Länge der Pratze (7) ist, erstreckt.

6. Anordnung nach Anspruch 5, **dadurch gekennzeichnet, dass**, wenn die Pratze (7) in die gestreckte Aussparung (6) der äußeren Dichtung (3) eingreift, das Ende der Innenwand (9) mit dem Abstandhalter (7a), der die Pratze (7) mit der Außenseite (5a) der Zierleiste (5) verbindet, in Berührung ist, und das Ende der Außenwand (10) im Wesentlichen mit einer Außenoberfläche (5b) der Zierleiste (5), die sich quer in Bezug zu der Außenseite (5a) der Zierleiste (5) erstreckt, aneinander stößt.

7. Anordnung nach einem der Ansprüche 3 bis 6, **dadurch gekennzeichnet, dass** die Innenwand (9) des Endes der äußeren Dichtung (3) entlang ihres unteren Rands eine Krempe (11) umfasst, die zu der Außenwand (10) vorsteht, wobei diese Krempe (11) unter den unteren Rand (7b) der Pratze (7) eingreift, um den unteren Rand der Innenwand (9) der Dichtung (3) in Bezug zu der Pratze (7) zu verkeilen.

8. Kraftfahrzeug, das mit Anordnungen ausgestattet ist, die eine Zierleiste (5) und eine äußere Scheibendichtung (3) nach einem der Ansprüche 1 bis 7 umfassen.

## Claims

1. An assembly including on the one hand an outer window sealing strip (3) for a side door (1) of an automotive vehicle intended to be attached along the upper edge (4a) of the outer panel (4) of the side door, and on the other hand a trim moulding (5) intended to be attached to the body of the vehicle near the rear side edge of the window (2) of said side door, one end (3a) of the outer window sealing strip (3) comprises attachment means cooperating with complementary attachment means provided on the trim moulding (5), so as to index said end (3a) with respect to the trim moulding (5) along the longitudinal axis (X), the transverse axis (Y) and the vertical axis (Z) of the vehicle, **characterized in that** the end (3a) of the outer sealing strip (3) includes an elongated recess (6) along the length of the sealing strip (3) which leads towards this end (3a), and the trim moulding (5) has, in the attachment area of said end of the sealing strip (3), a tab (7) projecting with respect to an outer face (5a) of the trim moulding (5), said recess (6) of the end of the sealing strip (3) engaging on said tab (7) of the trim moulding (5) in a manner parallel to said longitudinal axis (X).

2. The assembly according to Claim 1, **characterized in that** said tab (7) includes a part which extends in a manner parallel to said outer face (5a) of the trim moulding (5) and has a thickness substantially equal to the width of the elongated recess (6) of the outer sealing strip (3).

3. The assembly according to Claim 2, **characterized in that** said part of the tab (7) is connected to the outer face (5a) of the trim moulding (5) by a spacer (7a) so as to define between said part of the tab (7) and the outer face (5a) of the trim moulding a housing (8) receiving an end of an inner wall (9) of the outer sealing strip (3), one of the faces of which is adjacent to said elongated recess (6) and the other face of which is situated in the extension of the inner face of the outer sealing strip (3).

4. The assembly according to Claim 3, **characterized in that** the width of said housing (8) is substantially equal to the thickness of said end of the inner wall (9) of the outer sealing strip (3).

5. The assembly according to one of Claims 3 or 4, **characterized in that** the end of the outer sealing strip (3) comprises an outer wall (10) which is separated from said inner wall (9) by said recess (6), the end of this outer wall (10) extending beyond the end of said inner wall (9) along a distance substantially equal to the length of said tab (7).

6. The assembly according to Claim 5, **characterized in that** when said tab (7) is engaged in said elongated recess (6) of the outer sealing strip (3), the end of said inner wall (9) is in contact with the spacer (7a) which connects the tab (7) to the outer face (5a) of the trim moulding (5) and the end of said outer wall (10) is substantially contiguous with an outer surface (5b) of the trim moulding (5) extending transversely with respect to said outer face (5a) of the trim moulding (5).

7. The assembly according to one of Claims 3 to 6, **characterized in that** said inner wall (9) of the end of the outer sealing strip (3) has, along its lower edge, a rim (11) projecting towards said outer wall (10), this rim (11) engages beneath the lower edge (7b) of said tab (7) to wedge the lower edge of the inner wall (9) of the sealing strip (3) with respect to said tab (7).

8. An automotive vehicle equipped with assemblies including a trim moulding (5) and an outer window sealing strip (3) according to one of Claims 1 to 7.
